# EUROPÄISCHE PATENTSCHRIFT

(11) **EP 3 523 633 B1**
(45) Veröffentlichungstag und Bekanntmachung des Hinweises auf die Patenterteilung: **12.08.2026**
(21) Anmeldenummer: 17787338.7
(22) Anmeldetag: 28.09.2017
(51) Int. Cl.: G01N 21/84, G01B 11/06, G01N 21/3586

(54) **VORRICHTUNG UND VERFAHREN ZUM ZEITAUFGELÖSTEN ERFASSEN GEPULSTER ELEKTROMAGNETISCHER HOCHFREQUENZSTRAHLUNG**
APPARATUS AND METHOD FOR TIME-RESOLVED CAPTURE OF PULSED ELECTROMAGNETIC RADIOFREQUENCY RADIATION
DISPOSITIF ET PROCÉDÉ POUR LA DÉTECTION À RÉSOLUTION TEMPORELLE D'UN RAYONNEMENT HAUTE FRÉQUENCE ÉLECTROMAGNÉTIQUE PULSÉ

(30) Priorität: 05.10.2016 DE 102016118905
(43) Veröffentlichungstag der Anmeldung: 14.08.2019
(73) Patentinhaber: Fraunhofer-Gesellschaft zur Förderung der angewandten Forschung e.V., 80686 München (DE)
(72) Erfinder: VON FREYMANN, Georg, 67657 Kaiserslautern (DE); JONUSCHEIT, Joachim, 67269 Grünstadt (DE); KLIER, Jens, 67661 Kaiserslautern (DE); MOLTER, Daniel, 67663 Kaiserslautern (DE)
(74) Vertreter: WSL Patentanwälte Partnerschaft mbB
(86) Internationale Anmeldenummer: PCT/EP2017/074580
(87) Internationale Veröffentlichungsnummer: WO 2018/065281

(56) Entgegenhaltungen:
- EP-A1- 2 899 498
- WO-A2-2014/063044
- DE-A1- 102015 208 449
- JP-B2- 4 403 272
- US-A1- 2013 204 577

## Beschreibung

Die vorliegende Erfindung betrifft eine Vorrichtung zum zeitaufgelösten Erfassen gepulster elektromagnetischer Hochfrequenzstrahlung mit einem Generator, wobei der Generator derart eingerichtet ist, dass der Generator in einem Betrieb der Vorrichtung Impulse elektromagnetischer Hochfrequenzstrahlung erzeugt, und einem Detektor, wobei der Detektor derart eingerichtet und angeordnet ist, dass der Detektor in dem Betrieb der Vorrichtung die Feldstärke oder die Intensität der von einer Probe reflektierten Impulse als Funktion der Zeit erfasst.

Die vorliegende Erfindung betrifft darüber hinaus ein Verfahren zum zeitaufgelösten Erfassen gepulster elektromagnetischer Hochfrequenzstrahlung mit den Schritten: Erzeugen von Impulsen elektromagnetischer Hochfrequenzstrahlung mit einem Generator, Bestrahlen einer Probe mit den Impulsen und Erfassen der Feldstärke der von der Probe reflektierten Impulse als Funktion der Zeit mit einem Detektor.

Seit geraumer Zeit werden Terahertz-Zeitbereichsspektrometer als Anrege-Abfrage-Messverfahren eingesetzt. Ein erzeugter elektromagnetischer Impuls im Terahertz-Frequenzbereich wird nach Durchlaufen einer Probe oder nach Reflexion an einer Probe in einem Detektor mit Hilfe eines optischen Impulses abgetastet. Dabei macht man sich zunutze, dass der optische Impuls zur Abtastung zeitlich deutlich kürzer ist als der Impuls der elektromagnetischen Strahlung im Terahertz-Frequenzbereich. Mit Hilfe dieses Messverfahrens wird das elektrische oder magnetische Feld der elektromagnetischen Terahertz-Impulse zeitaufgelöst erfasst. Aus der so erfassten Funktion der Feldstärke von der Zeit lassen sich insbesondere durch Fourier-Transformation Frequenzbereichsdaten errechnen, aber auch Informationen bspw. über Schichtdicken einer Mehrschichtprobe erhalten.

Dieses abtastende Messverfahren liefert brauchbare Messergebnisse solange der Zeitversatz zwischen dem abtastenden optischen Impuls und dem Terahertz-Impuls durch die Messapparatur wohldefiniert ist und keinen Störungen unterliegt. Ändert sich der Zeitversatz zwischen den abtastenden optischen Impulsen und den Terahertz-Impulsen durch mechanische Störeinflüsse während der Abtastung, so liefert dieses Verfahren eine verzerrte Funktion der Feldstärke des Terahertz-Impulses von der Zeit, das Spektrum des Impulses wird verfälscht und die Messung wird unbrauchbar. Insbesondere in industriellen Umgebungen und bei robotergestützten Messungen sind mechanische Schwingungen jedoch kaum vermeidbar, was zu hohen Anforderungen an die mechanische Stabilität und ggf. mechanische Entkopplung des Messsystems führt.

Ein Ansatz, den Einfluss mechanischer Störungen zu reduzieren liegt in der Erhöhung der Messrate pro Abtastvorgang für einen Impuls. Die innerhalb einer Messung auftretende Störung ist relativ gesehen umso kleiner, je höher die Messrate ist. Allerdings ist die maximal mögliche Abtast- oder Messrate für ein Terahertz-Zeitbereichsspektrometer durch die verwendeten Verzögerungseinrichtungen beschränkt. Zudem liefert die Erhöhung der Messrate keine fundamentale Lösung des Problems, sondern lindert dieses nur auf die Weise, dass Störungen in einen tieferen Frequenzbereich transformiert werden.

Aus der US 2013/0204577 A1 ist ein analytisches Modell bekannt, welches die Ausbreitung von Strahlung durch ein beschichtetes kontinuierliches Bahnmaterial simuliert, wobei die Schichtdicke und der Brechungsindex als Variablen die Geschwindigkeit und Richtung der transmittierten Strahlung bestimmen. Das Modell sagt Eigenschaften der transmittierten Strahlung basierend auf Eigenschaften der einfallenden Strahlung und initial zugeordneten Werten für die Schichtdicken voraus. Die Schichtdicken werden in einem Verfahren bestimmt, wobei einfallende Strahlung mit bekannten Eigenschaften auf ein beschichtetes Bahnmaterial gelenkt wird und danach tatsächliche Messungen von transmittierte Strahlung mit den vorhergesagten Eigenschaften verglichen werden. Strahlungsmessungen werden erhalten, wobei eine Terahertz-Time-Domain-Spektroskopievorrichtung verwendet wird, die eine kontinuierliche Referenz erzeugt, wobei die Phase und Amplitude eines Probenimpulses verfolgt und korrigiert werden können.

Aus der WO 2014/063044 A2 ist zudem ein System zum Interpretieren von Terahertzstrahlung bekannt, welches einen Terahertztransmitter umfasst, der so eingerichtet ist, dass er einen Impuls von Terahertzstrahlung ausgibt, und einen Terahertzempfänger, der so eingerichtet ist, dass er zumindest einen Teil des Impulses von dem Terahertztransmitter empfängt. Der Terahertzempfänger ist so eingerichtet, dass er ein Signal basierend auf der von dem Terahertzempfänger empfangenen Strahlung ausgibt.

Die JP 4403272 B2 beschreibt die Bereitstellung eines Verfahrens und einer Vorrichtung zur Messung, die Informationen über die Amplitudenintensität und die Phaseninformation des von einer Messprobe reflektierten Terahertz-Impulses enthält, ohne durch die Form der Probe, ihre physikalischen Eigenschaften und das Verfahren zu ihrer Befestigung eingeschränkt zu sein. Das beschriebene Spektrometer besteht aus: einem spektroskopischen System zur Bestrahlung des Messobjekts mit dem durch den Laserimpuls erzeugten Terahertz-Lichtimpuls und zur Erfassung des vom Messobjekt reflektierten Lichts; und einer Positionsmessvorrichtung zur Erfassung der relativen Position zwischen dem Messobjekt und dem spektroskopischen System. Eine Verzögerungseinrichtung des spektroskopischen Systems wird unter Verwendung der erfassten relativen Positionsinformationen korrigiert. Dadurch wird die Messung einschließlich der Information der Amplitudenintensität und der Phaseninformation des von der Messprobe reflektierten Terahertz-Lichtimpulses ermöglicht, ohne durch die Form der Probe, die physikalischen Eigenschaften und das Verfahren ihrer Befestigung eingeschränkt zu sein.

Die EP 2899498 A1 beschreibt die Bereitstellung eines Verfahrens zur Charakterisierung eines beschichteten Körpers durch mindestens einen Beschichtungsparameter auf der Grundlage der Anpassung an ein physikalisches Modell. Der beschichtete Körper umfasst ein Substrat, das mit einer polymeren Beschichtung, wie z.B. einem Lackfilm, beschichtet ist, wobei die polymere Beschichtung mindestens eine Schicht aufweist. Das Verfahren wird von einem Sensorsystem berührungslos durchgeführt, wobei das Sensorsystem ein Sendersystem zum Aussenden von Terahertzstrahlung, ein Detektorsystem zum Erfassen von Terahertzstrahlung und eine mit dem Sendersystem und dem Detektorsystem betrieblich verbundene Verarbeitungseinheit umfasst. Das Verfahren umfasst: Aussenden eines Terahertzstrahlungssignals durch das Sendesystem in Richtung des beschichteten Körpers, so dass die Terahertzstrahlung mit der Polymerbeschichtung in Wechselwirkung tritt; Erfassen eines Antwortsignals durch das Detektorsystem, wobei das erfasste Terahertzstrahlungssignal mit der Polymerbeschichtung in Wechselwirkung getreten ist; Bestimmen von Modellparametern des physikalischen Modells durch Optimieren der Modellparameter, so dass ein vorhergesagtes Antwortsignal des physikalischen Modells an das detektierte Antwortsignal angepasst wird, wobei die Modellparameter optische Eigenschaften der polymeren Beschichtung anzeigen, die die Wechselwirkung des Terahertzstrahlungssignals mit der polymeren Beschichtung beschreiben; Bestimmen des mindestens einen Beschichtungsparameters aus den bestimmten Modellparametern, wobei der mindestens eine Beschichtungsparameter eine Dicke der polymeren Beschichtung umfasst.

Daher ist es Aufgabe der vorliegenden Erfindung, eine Vorrichtung sowie ein Verfahren zum zeitaufgelösten Erfassen gepulster elektromagnetischer Hochfrequenzstrahlung bereitzustellen, welche die Einflüsse durch mechanische Störungen auf die Messung reduzieren.

Zumindest eine der zuvor genannten Aufgaben wird durch eine Vorrichtung nach Anspruch 1 zum zeitaufgelösten Erfassen gepulster elektromagnetischer Hochfrequenzstrahlung gelöst mit einem Generator, wobei der Generator derart eingerichtet ist, dass der Generator in einem Betrieb der Vorrichtung Impulse elektromagnetischer Hochfrequenzstrahlung erzeugt, und einem Detektor, wobei der Detektor derart eingerichtet und angeordnet ist, dass der Detektor in dem Betrieb der Vorrichtung die Feldstärke der von einer Probe reflektierten Impulse als Funktion der Zeit erfasst, wobei die Vorrichtung darüber hinaus ein Abstandsmesssystem und eine mit dem Detektor und dem Abstandsmesssystem verbundene Auswerteeinrichtung aufweist, wobei das Abstandsmesssystem derart eingerichtet und angeordnet ist, dass das Abstandsmesssystem in dem Betrieb der Vorrichtung eine Änderung eines Abstands zwischen dem Generator und der Probe und/oder zwischen der Probe und dem Detektor als Funktion der Zeit erfasst, und wobei die Auswerteeinrichtung derart eingerichtet ist, dass die Auswerteeinrichtung aus der erfassten Funktion der Feldstärke von der Zeit und der erfassten Funktion der Änderung des Abstands von der Zeit eine korrigierte Funktion der Feldstärke von der Zeit berechnet, wobei die korrigierte Funktion der Feldstärke berechnet wird, indem die erfasste Feldstärke des einen Impulses zu jedem Zeitpunkt *t* zu einem Zeitpunkt *t'* transferiert wird, welcher demjenigen Zeitpunkt entspricht, zu dem die Feldstärke erfasst worden wäre, wenn sich der Abstand zwischen dem Generator und der Probe oder zwischen der Probe und dem Detektor während der Dauer der Abtastung des Impulses nicht geändert hätte, und wobei das Erfassen der Änderung des Abstands zwischen dem Generator und der Probe oder zwischen der Probe und dem Detektor als Funktion der Zeit mit einer Messrate von 100 kHz oder mehr, vorzugsweise von 150 kHz oder mehr und besonders bevorzugt von 200 kHz oder mehr erfolgt.

Entscheidend für die vorliegende Erfindung ist, dass unabhängig von dem Generator und dem Detektor für die Impulse der elektromagnetischen Hochfrequenzstrahlung, d.h. insbesondere unabhängig von dem Terahertz-Zeitbereichsspektrometer, Änderungen des Abstands zwischen dem Generator und der Probe und/oder zwischen der Probe und dem Detektor als Funktion der Zeit erfasst werden.

Auf diese Weise kann die Zeitbasis der erfassten Feldstärke der Impulse der Hochfrequenzstrahlung derart korrigiert werden, dass sie nur von der von der Vorrichtung vorgegebenen Zeitbasis abhängt. Zu diesem Zweck müssen der Generator und der Detektor für die Hochfrequenzstrahlung einerseits und das Abstandsmesssystem andererseits voneinander getrennte und unabhängige Messsysteme sein.

In einer Ausführungsform der Erfindung ist das Abstandsmesssystem ein Interferometer oder ein Radarsystem.

In einer Ausführungsform weist ein optisches Interferometer als Abstandsmesssystem im Sinne der vorliegenden Erfindung eine Genauigkeit im Bereich von 10 µm oder besser auf. In einer Ausführungsform hat das Abstandsmesssystem eine Abtastrate von 0,5 MHz oder mehr.

In einer Ausführungsform der Erfindung ist keine Bestimmung des absoluten Abstands zwischen dem Generator und der Probe und/oder zwischen der Probe und dem Detektor erforderlich. Vielmehr gilt es Änderungen dieses Abstands zu erfassen.

Daher ist in einer Ausführungsform der Erfindung, bei welcher die Bestimmung der Änderung des Abstands mithilfe eines Interferometers oder eines Radarsystems erfolgt, keine Bestimmung des absoluten Abstandes erforderlich.

In einer Ausführungsform der Erfindung liegt die Frequenz der elektromagnetischen Hochfrequenzstrahlung in einem Frequenzbereich von 1 GHz bis 30 THz, vorzugsweise von 100 GHz bis 5 THz. Dieser Frequenzbereich wird im Sinne der vorliegenden Anmeldung als Terahertz-Frequenzbereich bezeichnet.

Es versteht sich, dass dabei die Impulse der elektromagnetischen Hochfrequenzstrahlung nicht monofrequent sind, sondern in Abhängigkeit von der Impulsdauer eine endliche spektrale Bandbreite aufweisen.

Während es grundsätzlich möglich ist, mit einem Detektor für die Impulse der elektromagnetischen Hochfrequenzstrahlung die elektrische oder die magnetische Feldstärke zeitaufgelöst zu erfassen, wird es für die meisten Ausführungsformen der Erfindung zweckmäßig sein, die Feldstärke des elektrischen Feldes zu erfassen.

In einer Ausführungsform der Erfindung umfasst die Vorrichtung ein Zeitbereichsspektrometer, wobei der Generator für die Impulse der elektromagnetischen Hochfrequenzstrahlung und der Detektor für die Impulse der elektromagnetischen Hochfrequenzstrahlung Bestandteile dieses Zeitbereichsspektrometers sind. Zudem umfasst das Zeitbereichsspektrometer eine Kurzpulslaserquelle, die derart eingerichtet ist, dass sie in dem Betrieb der Vorrichtung impulsförmige optische elektromagnetische Strahlung erzeugt. Diese kurzen optischen Impulse dienen dann dazu, den Generator zu treiben und den Detektor zu schalten.

Derartige Generatoren und Detektoren für elektromagnetische Strahlung im Terahertz-Frequenzbereich, welche von elektromagnetischen Impulsen getrieben oder von diesen geschaltet werden, sind insbesondere nicht-lineare optische Kristalle, sog. photokonduktive oder photoleitfähige Schalter auf Basis von Halbleiterbauelementen und spintronische auf einer Vielzahl von metallischen Schichten beruhende Generatoren und Detektoren.

Bei der Verwendung eines photokonduktiven Schalters, ggf. in Kombination mit jeweils einer daran angeschlossenen Antenne, bewirkt das Auftreffen eines kurzen elektromagnetischen Impulses auf den photoleitfähigen Schalter bei einer entsprechenden elektrischen Vorspannung des Schalters einen kurzzeitigen Stromfluss in dem Bauteil und somit die Abstrahlung elektromagnetischer Hochfrequenzstrahlung. Der elektromagnetische Impuls auf der Detektorseite dient demgegenüber dazu, den Detektor mithilfe des photokonduktiven Schalters kurzzeitig zu schalten und so das elektrische Feld der gleichzeitig auf den Detektor auftreffenden elektromagnetischen Hochfrequenzstrahlung messbar zu machen.

Misst man an den Zuleitungen des photokonduktiven Schalters des Detektors einen Strom, so lässt sich das Feld der elektromagnetischen Terahertz-Strahlung, welches auf das Hochfrequenzbauteil auftrifft, zeitaufgelöst erfassen. Das elektrische Feld der auf den Detektor auftreffenden elektromagnetischen Terahertz-Strahlung treibt dabei Ladungsträger in Längsrichtung über den Schalter. Ein Stromfluss ist nur dann möglich, wenn gleichzeitig der photokonduktive Schalter geschlossen ist, d.h. der Schalter mit der ersten elektromagnetischen Strahlung bestrahlt wird.

Ist ein zum Schalten oder Gaten des photokonduktiven Schalters des Detektors verwendeter elektromagnetischer Impuls kurz gegenüber dem Zeitverlauf des elektrischen Feldes des von dem Detektor empfangenen Impulses im Terahertz-Frequenzbereich, so lässt sich das elektrische Feld des Terahertz-Signals zeitaufgelöst abtasten bzw. messen.

Dazu wird ein Zeitversatz zwischen den auf den Detektor auftreffenden Terahertz-Impulsen und den zum Schalten des Detektors verwendeten elektromagnetischen Impulsen eingeführt und während der Messung variiert.

Es versteht sich, dass das Terahertz-Zeitbereichsspektrometer in einer Ausführungsform mit einem photokonduktiven Schalter als Detektor einen geeigneten Strom- oder Spannungsverstärker aufweist, welcher einerseits zum Erfassen der Ströme über den Schalter des Detektors mit diesem und andererseits mit der Auswerteeinrichtung verbunden ist.

In einer Ausführungsform weist die Vorrichtung eine Strahlteilereinrichtung auf, der derart eingerichtet und angeordnet ist, dass sie in einem Betrieb der Vorrichtung einen ersten Teil der optischen Impulse auf den Generator und einen zweiten Teil der optischen Impulses auf den Detektor leitet. In einer Ausführungsform ist eine solche Strahlteilereinrichtung ein Strahlteiler, beispielsweise ein Faserschmelzkoppler. In einer Ausführungsform ist eine solche Strahlteilereinrichtung durch eine Laserquelle realisiert, welche die optischen Impulse für Generator und Detektor derart erzeugt, dass sie bereits in räumlich getrennten Strahlpfaden bereitgestellt werden.

Zudem weist die Vorrichtung in einer Ausführungsform eine Verzögerungseinrichtung auf, die derart eingerichtet ist, dass mit der Verzögerungseinrichtung in dem Betrieb der Vorrichtung eine zeitliche Verzögerung zwischen dem Auftreffen der Hochfrequenz-Impulse und der optischen Impulse auf dem Detektor einstellbar veränderbar ist. Dabei ist die Verzögerungseinrichtung weiterhin mit der Auswerteeinrichtung verbunden, wobei die Auswerteeinrichtung derart eingerichtet ist, dass sie in dem Betrieb der Vorrichtung die Verzögerungseinrichtung und damit die zeitliche Verzögerung zwischen Hochfrequenz-Impuls und optischen Impuls auf dem Detektor steuert.

Die Verzögerungseinrichtung gibt in dieser Ausführungsform die Zeitbasis für die erfasste Funktion der Feldstärke von der Zeit vor. Diese Zeitbasis erfordert jedoch nur dann keine Korrektur, wenn die tatsächliche Verzögerung zwischen der elektromagnetischen Hochfrequenzstrahlung und der optischen Strahlung auf dem Detektor keinen anderen Einflüssen unterliegt als der von der Verzögerungseinrichtung vorgegebenen zeitlichen Variation. Ändert sich aber bspw. durch mechanische Erschütterungen der Abstand zwischen dem Generator und der Probe und/oder zwischen der Probe dem Detektor, so wird die von der Verzögerungseinrichtung vorgegebenen Zeitbasis verfälscht.

Die vorliegende Erfindung ermöglicht es nun, diese Zeitbasis zu korrigieren, indem das Abstandsmesssystem Abstandsänderung zwischen dem Generator und der Probe und/oder zwischen der Probe und dem Detektor als Funktion der Zeit erfasst. In der Auswerteeinrichtung wird dann aus der erfassten Funktion der Feldstärke von der Zeit und der erfassten Funktion der Änderung des Abstands von der Zeit eine korrigierte Funktion der Feldstärke von der Zeit berechnet.

In einer Ausführungsform der Erfindung ist die Auswerteeinrichtung ein entsprechend programmierter Rechner oder Mikroprozessor mit den notwendigen Schnittstellen. Die Schnittstellen dienen in einer Ausführungsform dazu, die Feldstärke der Hochfrequenzstrahlung zu erfassen, die Änderung des Abstands zwischen Generator und Probe und/oder zwischen Probe und Detektor als Funktion der Zeit zu erfassen und die korrigierte Funktion der Feldstärke von der Zeit zu berechnen.

Dazu ist die Auswerteeinrichtung in einer Ausführungsform über eine Steuerleitung mit der Verzögerungsstrecke, bspw. dem Encoder eines Linearverstellers der Verzögerungsstrecke, verbunden. Darüber hinaus ist die Auswerteeinrichtung in einer Ausführungsform mit dem Detektor für die Hochfrequenzstrahlung verbunden. In einer Ausführungsform ist die Auswerteeinrichtung mit einem Detektor des Abstandsmesssystems verbunden, um die Funktion einer Änderung des Abstands zwischen dem Generator und der Probe und/oder zwischen der Probe und dem Detektor als Funktion der Zeit aufnehmen und auswerten zu können.

Die Auswerteeinrichtung ist derart eingerichtet, dass sie zum Berechnen der korrigierten Funktion der Feldstärke von der Zeit die erfasste Feldstärke eines Impulses zu jedem Zeitpunkt *t* zu einem Zeitpunkt *t'* transferiert wird, welcher demjenigen Zeitpunkt entspricht, zu dem die Feldstärke erfasst worden wäre, wenn sich der Abstand zwischen dem Generator und der Probe und/oder zwischen der Probe und dem Detektor während der Abtastung des Impulses nicht geändert hätte.

Zumindest eine der zuvor genannten Aufgaben wird auch durch ein Verfahren nach Anspruch 4 zum zeitaufgelösten Erfassen gepulster elektromagnetischer Hochfrequenzstrahlung gelöst mit den Schritten: Erzeugen von Impulsen elektromagnetischer Hochfrequenzstrahlung mit einem Generator, Bestrahlen einer Probe mit den Impulsen, Erfassen der Feldstärke der von der Probe reflektierten Impulse als Funktion der Zeit mit einem Detektor, Erfassen einer Änderung eines Abstands zwischen dem Generator und der Probe und/oder zwischen der Probe und dem Detektor als Funktion der Zeit mit einem Abstandsmesssystem und Berechnen einer korrigierten Funktion der Feldstärke von der Zeit aus der erfassten Funktion der Feldstärke von der Zeit und der Funktion der Änderung des Abstands von der Zeit, wobei die korrigierte Funktion der Feldstärke berechnet wird, indem die erfasste Feldstärke eines Impulses zu jedem Zeitpunkt *t* zu einem Zeitpunkt *t'* transferiert wird, welcher demjenigen Zeitpunkt entspricht, zu dem die Feldstärke erfasst worden wäre, wenn sich der Abstand zwischen dem Generator und der Probe oder zwischen der Probe und dem Detektor während der Dauer der Abtastung des Impulses nicht geändert hätte, und wobei das Erfassen der Änderung des Abstands zwischen dem Generator und der Probe oder zwischen der Probe und dem Detektor als Funktion der Zeit mit einer Messrate von 100 kHz oder mehr, vorzugsweise von 150 kHz oder mehr und besonders bevorzugt von 200 kHz oder mehr erfolgt.

Soweit zuvor Aspekte der Erfindung im Hinblick auf die Vorrichtung zum zeitaufgelösten Erfassen gepulster elektromagnetischer Hochfrequenzstrahlung beschrieben wurden, so gelten diese auch für das entsprechende Verfahren. Soweit das Verfahren mit einer Vorrichtung zum zeitaufgelösten Erfassen gepulster elektromagnetischer Hochfrequenzstrahlung gemäß dieser Erfindung ausgeführt wird, so weist diese die entsprechenden Einrichtungen hierfür auf. Insbesondere sind Ausführungsformen der Vorrichtung zum Ausführen des Verfahrens geeignet.

Wenn zu einem Zeitpunkt *t* oder um diesen herum keine Änderung des Abstands zwischen dem Generator und der Probe und/oder zwischen der Probe und dem Detektor mit Hilfe des Abstandsmesssystems erfasst wird, so verbleibt die Feldstärke diesem Zeitpunkt *t* zugeordnet, der somit ausschließlich von der von der Verzögerungseinrichtung vorgegebenen Zeitbasis vorgegeben ist. Wird allerdings zu dem Zeitpunkt *t* eine Änderung des Abstands erfasst, so wird die Feldstärke von dem von der Verzögerungseinrichtung vorgegebenen Zeitpunkt *t* zu einem Zeitpunkt *t'* transferiert oder verschoben, welcher dem zeitlichen Versatz zwischen optischem Impuls und Hochfrequenz-Impuls auf dem Detektor entspricht wenn keine Änderung des Abstands zwischen dem Generator und der Probe und/oder zwischen der Probe und dem Detektor aufgetreten wäre.

Das erfindungsgemäße Verfahren ist insbesondere zum Bestimmen von Schichtdicken einer Mehrzahl von *N* übereinander angeordneten Schichten, wie z.B. Lackschichten, geeignet. Daher weist in einer Ausführungsform der Erfindung die Probe einer Mehrzahl von N übereinander angeordneten Schichten *Sᵢ* in jeweils einer Schichtdicke *dᵢ* auf, wobei *i* gleich *1,2,3,..., N,* wobei aus der korrigierten Funktion der Feldstärke von der Zeit die Schichtdicken *dᵢ* aller *N* Schichten bestimmt werden.

Zum Bestimmen der Schichtdicken wird die Impulsantwort der Probe, d.h. die von der Probe reflektierte und mit der Probe gewechselwirkte Hochfrequenzstrahlung mit einem Modell gefittet.

Dazu umfasst in einer Ausführungsform der Erfindung das Bestimmen der Schichtdicken *dᵢ* die Schritte:
a) Auswählen einer Schichtdicke *dᵢ*, eines Absorptionsindex *kᵢ* und eines Brechungsindex *nᵢ* für jede Schicht *Sᵢ*, mit *i = 1,2,3,..., N,*
b) Berechnen einer zeitabhängigen Feldstärke *E_{M}(t)* für die von der Probe reflektierte elektromagnetische Hochfrequenzstrahlung anhand eines Modells, wobei das Modell eine entsprechende Anzahl von *N+1* Grenzflächen zwischen einer Messumgebung und der Probe sowie zwischen den einzelnen Schichten jeweils eine zeitabhängige Feldstärke *Eⱼ(t),* mit *j = 0,1,2,3,...,N,* berücksichtigt, wobei die Feldstärke *Eⱼ(t)* in Abhängigkeit von den Schichtdicken *dᵢ*, den Absorptionsindizes *kᵢ* und den Brechungsindizes *nᵢ* zu der zeitabhängigen Feldstärke *E_{M}(t)* addiert werden,
c) Vergleichen der berechneten zeitabhängigen Feldstärke *E_{M}(t)* mit der korrigierten Funktion der Feldstärke von der Zeit, wobei
d) dann, wenn eine Abweichung *Q* zwischen der berechneten Feldstärke *E_{M}(t)* und der korrigierten Funktion der Feldstärke größer ist als eine vorbestimmte Toleranz *T*, zumindest die Schichtdicken dᵢ solange variiert und die Schritte b) bis d) wiederholt werden bis die Abweichung *Q* kleiner als die Toleranz *T* ist, und
e) Bereitstellen der Schichtdicken *dᵢ* als Ergebnis der Schichtdickenbestimmung.

Dabei werden in einer Ausführungsform in Schritt d) auch die Absorptionsindizes *kᵢ* und die Brechungsindizes *nᵢ* variiert, um die Schichtdicke zu bestimmen.

In einer Ausführungsform der Erfindung wird die Anzahl der Iterationsschritte dadurch reduziert, dass Annahmen über die Dispersion, d.h. die Frequenzabhängigkeit der Absorptionsindizes *kᵢ* und Brechungsindizes *nᵢ* innerhalb der Frequenzbandbreite der verwendeten elektromagnetischen Hochfrequenzstrahlung getroffen werden und diese Annahmen in das Berechnen in Schritt b) einfließen.

In einer Ausführungsform weist die in dem Generator erzeugte elektromagnetische Hochfrequenzstrahlung eine vorgegebene Frequenzbandbreite auf und es wird davon ausgegangen, dass innerhalb der vorgegebenen Frequenzbandbreite der Hochfrequenzstrahlung keine Dispersion auftritt, d.h. über die Frequenzbandbreite der verwendeten elektromagnetischen Hochfrequenzstrahlung werden die Absorptionsindizes *kᵢ* und Brechungsindizes *nᵢ* beim Berechnen in Schritt b) als konstant angenommenen.

In einer dazu alternativen Ausführungsform weist die in dem Generator erzeugte elektromagnetische Hochfrequenzstrahlung eine vorgegebene Frequenzbandbreite auf und für die Frequenzabhängigkeit der Absorptionsindizes *kᵢ* und der Brechungsindizes *nᵢ* über die vorgegebene Frequenzbandbreite wird beim Berechnen in Schritt b) eine einfache, die Abhängigkeit beschreibendes Funktion, z.B. nach Drude-Lorentz, angenommen.

In einer weiteren alternativen Ausführungsform werden weist die in dem Generator erzeugte elektromagnetische Hochfrequenzstrahlung eine vorgegebene Frequenzbandbreite auf und die Frequenzabhängigkeiten der Brechungsindizes *nᵢ* und der Absorptionsindizes *kᵢ* über die vorgegebene Frequenzbandbreite wird für alle Schichten getrennt vorab in Kalibrationsmessungen erfasst und die so erhaltenen Messwerte werden der Berechnung in Schritt b) zu Grunde gelegt.

Erfindungsgemäß erfolgt das Erfassen der Änderung des Abstands zwischen dem Generator und der Probe oder zwischen der Probe und dem Detektor als Funktion der Zeit mit einer Messrate von 100 kHz oder mehr, vorzugsweise von 150 kHz oder mehr und besonders bevorzugt von 200 kHz oder mehr.

Weitere Vorteile, Merkmale und Anwendungsmöglichkeiten der vorliegenden Erfindung werden anhand der folgenden Beschreibung einer Ausführungsform und der dazugehörigen Figuren deutlich.
- Figur 1: ist eine schematische Darstellung der erfindungsgemäßen Vorrichtung zum zeitaufgelösten Erfassen gepulster elektromagnetischer Hochfrequenzstrahlung.
- Figur 2: ist eine schematische Darstellung des erfindungsgemäßen Verfahrens zum zeitaufgelösten Erfassen der elektromagnetischen Hochfrequenzstrahlung mit der Vorrichtung aus Figur 1.
- Figur 3: zeigt eine Schichtdickenmessung an einer Probe mit 3 Schichten ohne die erfindungsgemäße Abstandskorrektur.
- Figur 4: zeigt das Messergebnis der Schichtdickenbestimmung der Probe mit 3 Schichten aus Figur 3 jedoch mit der erfindungsgemäßen Abstandskorrektur.

In den Figuren sind identische Elemente mit identischen Bezugszeichen bezeichnet.

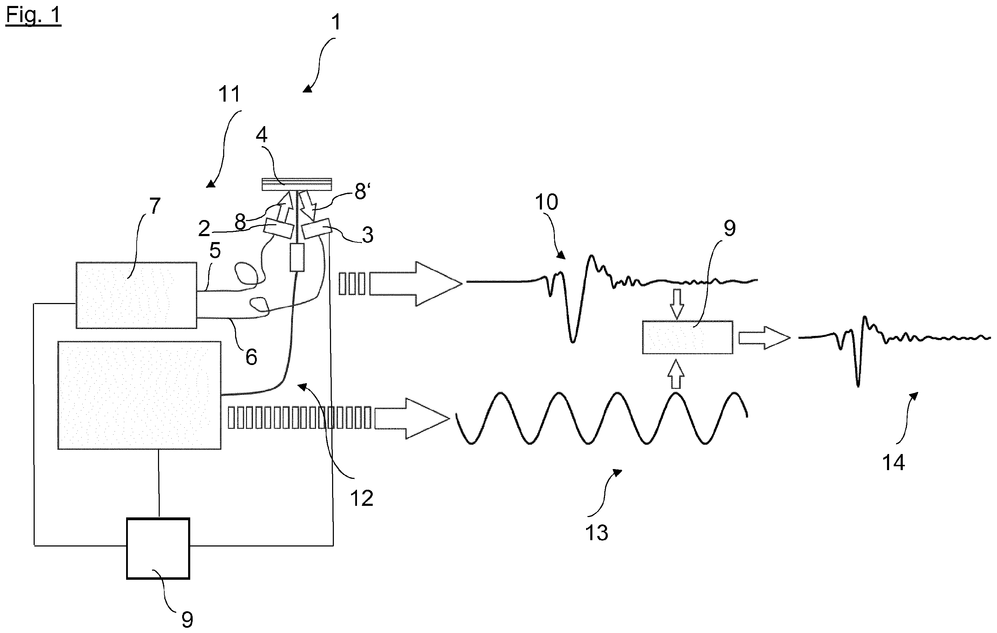

Figur 1 zeigt ein Terahertz-Zeitbereichsspektrometer 11 als Teil der erfindungsgemäßen Vorrichtung 1 zum zeitaufgelösten Erfassen gepulster elektromagnetischer Hochfrequenzstrahlung im Sinne der vorliegenden Erfindung.

Das Zeitbereichsspektrometer 1 umfasst einen Generator 2 zum Erzeugen der gepulsten elektromagnetischer Hochfrequenzstrahlung 8 und einen Detektor 3 zum Erfassen der elektrischen Feldstärke der von einer Probe 4 reflektierten Impulse als Funktion der Zeit.

Bei der Probe 4 handelt es sich um eine dreischichtige Lackprobe, wobei das Terahertz-Zeitbereichsspektrometer 11 dazu dient, die Dicken aller drei Schichten der Lackprobe 4 zu bestimmen. Sowohl der Generator 2 als auch der Detektor 3 sind über optische Glasfasern 5, 6 mit einem Femtosekundenlaser als Kurzpulslaserquelle im Sinne der vorliegenden Anmeldung verbunden. Der Femtosekundenlaser ist Teil einer in Figur 1 mit dem Bezugszeichen 7 versehenen und nur schematisch dargestellten Anordnung. Die von dem Femtosekundenlaser generierten kurzen optischen Impulse werden mithilfe eines ebenfalls in der Anordnung 7 vorgesehenen Faserschmelzkopplers auf zwei Strahlpfade aufgeteilt, sodass ein Teil der Impulse über die Glasfaser 5 auf den Generator 2 geleitet wird und ein anderer Teil der Impulse über die Glasfaser 6 auf den Detektor 3.

Darüber hinaus ist in der Anordnung 7 eine Verzögerungsstrecke als Verzögerungseinrichtung im Sinne der vorliegenden Anmeldung aus einem einstellbar veränderbaren optischen Weg vorgesehen. Diese dient dazu, die optischen Impulse, die auf den Generator 2 gelangen und diejenigen, die auf den Detektor 3 gelangen gegeneinander zu verzögern, um so eine Abtastung und die zeitlich aufgelöste Erfassung des elektrischen Feldes der von dem Generator 2 generierten und mit der Probe gewechselwirkten Terahertz-Strahlung 8' in dem Detektor 3 zu ermöglichen.

Sowohl bei dem Generator 2 als auch bei dem Detektor 3 handelt es sich um photokonduktive Schalter, welche in Antennen für die Terahertz-Strahlung eingebunden sind. Während die erste Schalter-/Antennenkombination 2 zum Erzeugen der Terahertz-Strahlung 8 verwendet wird, wird die zweite Schalter-/Antennenkombination 3 zur zeitaufgelösten Erfassung der von einer Probe 4 reflektierten Terahertz-Strahlung 8' eingesetzt.

Bei kurzzeitigem Schließen des photokonduktiven Schalters des Generators 2 mithilfe der ultrakurzen optischen Impulse, die durch die Glasfaser 5 auf den Schalter geleitet werden, wird dieser kurzzeitig elektrisch leitend, sodass bei einer entsprechenden Vorspannung ein Stromimpuls durch den Schalter fließt und zur Abstrahlung eines elektromagnetischen Hochfrequenz-Impulses führt. In dem photokonduktiven Schalter, welcher einen Teil des Detektors 3 bildet, führt das elektrische Feld eines auftreffenden Terahertz-Impulses dann zum Treiben von freien Ladungsträgern über den photokonduktiven Schalter, wenn dieser gerade mithilfe eines aus der Glasfaser 6 austretenden optischen Impulses beleuchtet ist. Dann ist über den photokonduktiven Schalter des Detektors 3 ein Strom messbar, welcher proportional zum momentanen elektrischen Feld des Terahertz-Impulses ist. Da der optische Impuls zum Schalten des Detektors 3 zeitlich ungleich kürzer ist als die zeitliche Ausdehnung der Oszillation des elektrischen Feldes des Terahertz-Impulses lässt sich durch ein Verzögern des optischen Impulses gegenüber dem Terahertz-Impuls auf dem photokonduktiven Schalter des Detektors 3 der Terahertz-Impuls zeitaufgelöst abtasten.

Zu diesem Zweck ist der Detektor 3 über einen Messverstärker mit einer Auswerteeinrichtung 9 verbunden. Diese Auswerteeinrichtung 9 übernimmt zudem die Steuerung der Verzögerungsstrecke in der Anordnung 7. Die aktuelle Position der Verzögerungsstrecke gibt dann die Zeitbasis für die Erfassung erfasste Funktion des elektrischen Feldes von der Zeit vor.

In der rechten Hälfte der Figur 1 ist beispielhaft die Zeitabhängigkeit des elektrischen Felds eines von der Probe 4 reflektierten Terahertz-Impulses dargestellt. Gezeigt ist in der mit dem Bezugszeichen 10 versehenen Darstellung die elektrische Feldstärke aufgetragen gegen die Zeit.

Der auf diese Weise erhaltene Signalverlauf ist jedoch nur dann der tatsächliche Verlauf des elektrischen Feldes mit der Zeit, wenn sich der Abstand zwischen dem der Probe 4 und dem Detektor 3 nicht gleichzeitig ändert. Andernfalls wird die Zeitbasis durch Änderungen dieses Abstands verfälscht, das diese Abstandsänderungen der Zeitbasis in dem Signal 10 nicht berücksichtigt sind. Das Signal 10 ist dann verzerrt.

Erfindungsgemäß wird nun die durch die Verzögerungsstrecke in der Anordnung 7 generierte Zeitbasis mit Hilfe der Schwankungen des Abstands zwischen der Probe und dem Detektor 3 korrigiert. Dazu verfügt die erfindungsgemäße Vorrichtung 1 neben dem Terahertz-Zeitbereichsspektrometer 11 über ein Abstandsmesssystem in Form eines optischen Interferometers 12. Das Interferometer 12 dient dazu, Abstandsänderungen zwischen der Probe 4 und dem Detektor 3 mit der gleichen Abtastrate zu erfassen, mit welcher auch das elektrische Feld mithilfe des Terahertz-Zeitbereichsspektrometers 11 erfasst wird.

Die Abstandsänderung der Probe 4 von dem Generator 2 und dem Detektor 3 ist in der rechten Seite der Figur 1 als Funktion der Zeit aufgetragen und mit dem Bezugszeichen 13 versehen. Für die schematische Betrachtung der Figur 1 wird angenommen, dass die Probe 4 um einen Ausgangspunkt herum eine Vibrationsbewegung ausführt, sodass sich der Abstand zwischen der Probe 4 und dem Detektor 3 im Wesentlichen sinusförmig ändert.

Auch diese Funktion der erfassten Abstandsänderung von der Zeit wird in der Auswerteeinrichtung 9 verarbeitet und, wie ebenfalls in der rechten Hälfte der Figur 1 schematisch angedeutet, zur Korrektur der Zeitbasis der erfassten Funktion 10 der Feldstärke von der Zeit verwendet. Als Ergebnis erhält man dann eine korrigierte Funktion 14 der Feldstärke von der Zeit.

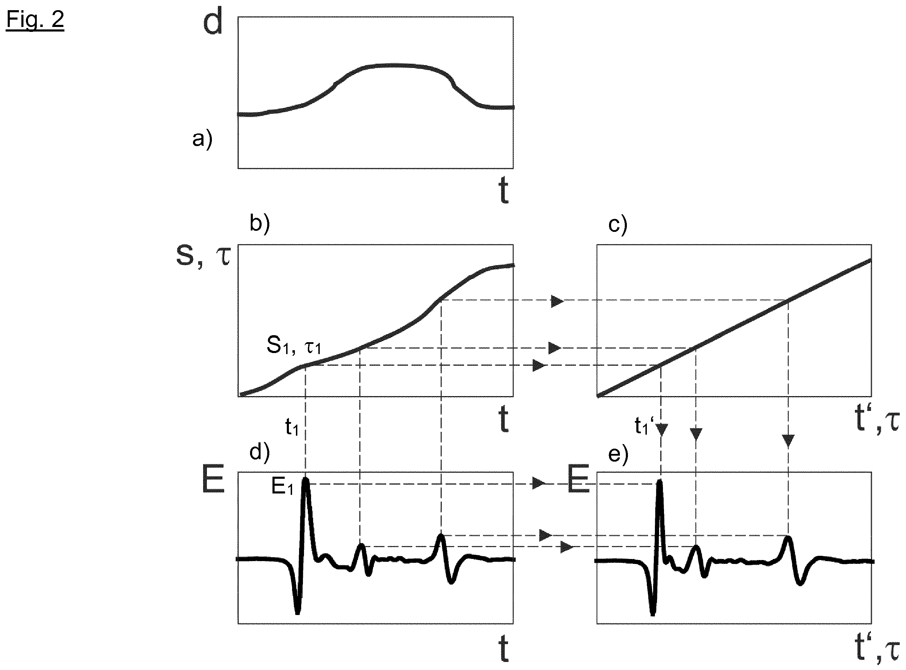

Anhand der Diagramme aus Figur 2 wird nun noch einmal im Detail ausgeführt, wie die Auswerteeinrichtung 9 aus der erfassten Funktion 10 der Feldstärke von der Zeit und der erfassten Funktion 13 der Änderung des Abstands von der Zeit eine korrigierte Funktion 14 der Feldstärke von der Zeit berechnet.

Figur 2 c) zeigt eine Darstellung der von der Verzögerungsstrecke vorgegebenen Wegdifferenz *S* zwischen dem Terahertz-Impuls und dem optischen Impuls auf dem Detektor 3 gegenüber der Zeit *t*'. Dabei entspricht die von der Verzögerungsstrecke eingefügte Wegdifferenz *S* einer zeitlichen Verzögerung *τ*, welche durch die Verzögerungsstrecke laufende elektromagnetische Strahlung gegenüber Strahlung in einem Referenzpfad erfährt. Diese zeitliche Verzögerung *τ* ist die von der Verzögerungsstrecke für die Messung vorgegebene Zeitbasis.

Figur 2 c) geht davon aus, dass die Änderungsrate der Wegdifferenz gegenüber der Zeit konstant ist. Allerdings unterliegt die Wegdifferenz S zwischen dem Terahertz-Impuls und dem optischen Impuls auf dem Detektor 3 zusätzlich Schwankungen aufgrund von Änderungen des Abstands *d* zwischen der Probe 4 und dem Detektor 3. Figur 2 a) zeigt den Abstand *d* zwischen der Probe 4 und dem Detektor 3 aufgetragen gegenüber der Zeit *t*. Deutlich sind die Schwankungen des Abstands zu erkennen. Aus dieser Änderung des Abstands d mit der Zeit *t* ergibt sich, dass die tatsächliche Wegdifferenz S gegenüber der verstrichenen Zeit *t* anders als in Figur 2 c) dargestellt keine lineare Funktion ist, sondern einen Verlauf aufweist, so wie er beispielhaft in Figur 2 b) gezeigt ist.

Um nun die Messung des elektrischen Feldes der Terahertz-Strahlung 8 gegenüber der Zeit aus Figur 2 d) zu korrigieren, betrachtet man beispielsweise einen ersten Messpunkt zum Zeitpunkt *t₁*. Zu diesem Zeitpunkt *t₁* ist der Weglängenunterschied zwischen dem Terahertz-Impuls und dem optischen Impuls auf dem Detektor 3 *S₁,* welcher einer Verzögerung *τ*₁ entspricht. Dieser Weglängendifferenz *S₁* entspricht jedoch bei einer idealisierten, nur von der Verzögerungsstrecke vorgegebenen Zeitbasis einer Zeit *t'₁.* Entsprechend wird der Messwert *E₁* des elektrischen Feldes *E* in dem Diagramm aus Figur 2 d) von dem Zeitpunkt *t₁* zu dem Zeitpunkt *t'₁* verschoben. Führt man diese Transformation für alle Messpunkte des elektrischen Feldes E gegenüber der Zeit *t* aus den Rohdaten der Figur 2 d) durch, so erhält man die korrigierte und um die Abstandsschwankungen aus Figur 2 a) bereinigte Funktion des elektrischen Felds *E* gegenüber der Zeit *t*' aus Figur 2 e).

Die Erfindungsgemäße Vorrichtung wird in der hier diskutierten Ausführungsform zum Bestimmen der Schichtdicken der drei übereinander angeordneten Schichten der Probe 4 verwendet. Bei dem Bestrahlen der Probe 4 mit den Impulsen der Terahertz-Strahlung mit einer vorgegebenen Frequenzbandbreite wird die auftreffende Strahlung an jeder Grenzfläche, also zwischen der Messumgebung und der Probe sowie zwischen zwei aneinandergrenzenden Schichten teilweise reflektiert. Die zeitabhängigen elektrischen Felder dieser Teilreflexe überlagern sich zu dem zeitabhängigen elektrischen Feld der Probe, welches bei der Messung mit dem Detektor 3 zeitaufgelöst erfasst wird. Bei genauer Betrachtung umfasst das elektrische Feld *E_{P}(t)* der Probe zusätzlich auch Mehrfachreflexe, die durch wiederholte Reflexionen der Hochfrequenzstrahlung an den Grenzflächen entstehen. Die zeitliche Abfolge der Teilreflexe und deren Phasen hängen von den Materialparametern der Schichten ab.

Zum Bestimmen aller drei Schichtdicken der Probe 4 mit einer Mehrzahl von *N=* 3 übereinander angeordneten Schichten *Sᵢ*, mit *i = 1, 2, 3*, werden die folgenden Schritte ausgeführt: Jede dieser Schichten weist ein Brechungsindex *nᵢ*, ein Absorptionsindex *kᵢ* und eine Schichtdicke *dᵢ* auf, die die Reflexions- und Transmissionseigenschaften der Schichten für die verwendete elektromagnetische Hochfrequenzstrahlung beeinflussen. In einem Schritt a) werden für jede Schicht *Sᵢ* eine Schichtdicke *dᵢ*, ein Brechungsindex *nᵢ* und ein Absorptionsindex *kᵢ* als Startwerte ausgewählt. In einem anschließenden Schritt b) wird ein zeitabhängiges, elektrisches Feld *Eₘ(t)* für die von der Probe reflektierte oder durch die Probe transmittierte elektromagnetische Hochfrequenzstrahlung anhand eines Modells berechnet. Das Modell umfasst entsprechend einer Anzahl von *N+1* Grenzflächen zwischen der Messumgebung und der Probe sowie zwischen den einzelnen Schichten jeweils ein zeitabhängiges elektrisches Feld *Eⱼ(t),* mit *j = 0, 1, 2, 3,* wobei die elektrischen Felder *Eⱼ(t)* zu dem zeitabhängigen elektrischen Feld *E_{M}(t)* des Modells in Abhängigkeit der Schichtdicken *dᵢ*, der Brechungsindizes *nᵢ* und den Absorptionsindizes *kᵢ* addiert werden. Das Modell beruht dabei auf der Annahme, dass der Brechungsindex *nᵢ* und der Absorptionsindex *kᵢ* einer jeden Schicht *Sᵢ* über die Frequenzbandbreite der verwendeten Hochfrequenzstrahlung konstant, also von der Frequenz der Hochfrequenzstrahlung unabhängig ist. Anschließend wird in einem Schritt c) das berechnete elektrische Feld *E_{M}(t)* des Modells mit dem erfassten elektrischen Feld *E_{P}(t)* der Probe verglichen, wobei in Schritt d) wenn eine Abweichung *Q* zwischen dem berechneten elektrischen Feld *E_{M}(t)* und dem erfassten elektrischen Feld *E_{P}(t)* größer als eine vorbestimmte Toleranz *T* ist, die Schichtdicken *dᵢ*, die Brechungsindizes *nᵢ* und die Absorptionsindizes *kᵢ* solange variiert und die Schritte b) bis d) wiederholt werden bis die Abweichung *Q* kleiner als die Toleranz *T* ist.

Ist die Abweichung *Q* kleiner als die Toleranz *T*, werden in einem Schritt e) die Schichtdicken *dᵢ* als Ergebnis der Schichtdickenbestimmung bereitgestellt.

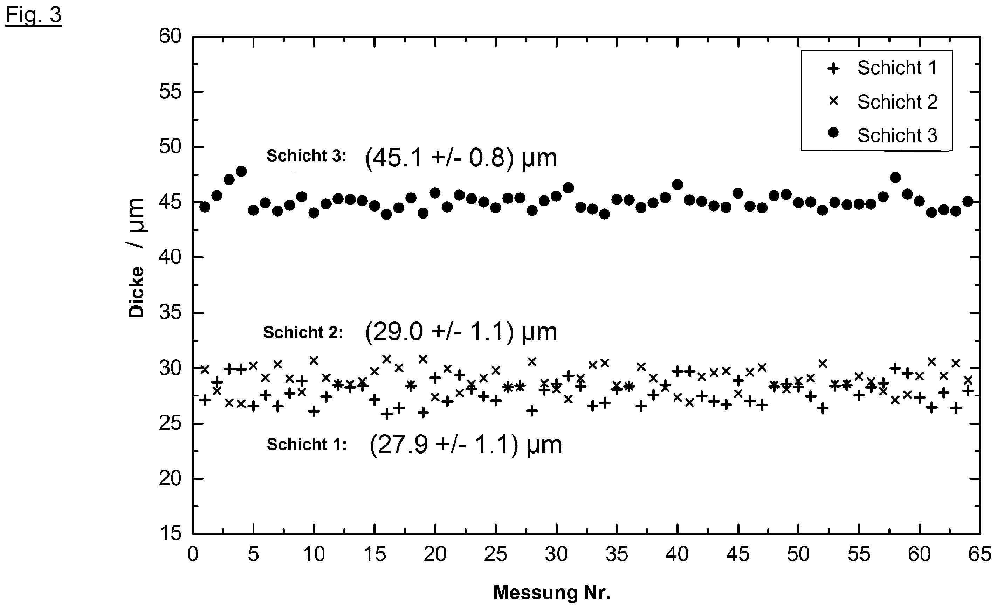

Figur 3 zeigt Messergebnisse einer entsprechenden Bestimmung der drei Schichtdicken der Probe 4, wobei die Korrektur in der Auswerteeinrichtung 9 ausgeschaltet ist. D.h. die Schichtdicken wurden anhand der erfassten Funktion der Feldstärke von der Zeit bestimmt. Aufgetragen in der Figur 3 ist das Ergebnis der Schichtdickenmessung für die als Layer 1 bis Layer 3 bezeichneten drei Schichten der Probe 4 gegen die Ordnungsnummer der entsprechenden Messung. Deutlich ist zu erkennen, dass die einzelnen Messwerte eine Streuung von bis zu 2,5 µm um einen Mittelwert der Dicke aufweisen.

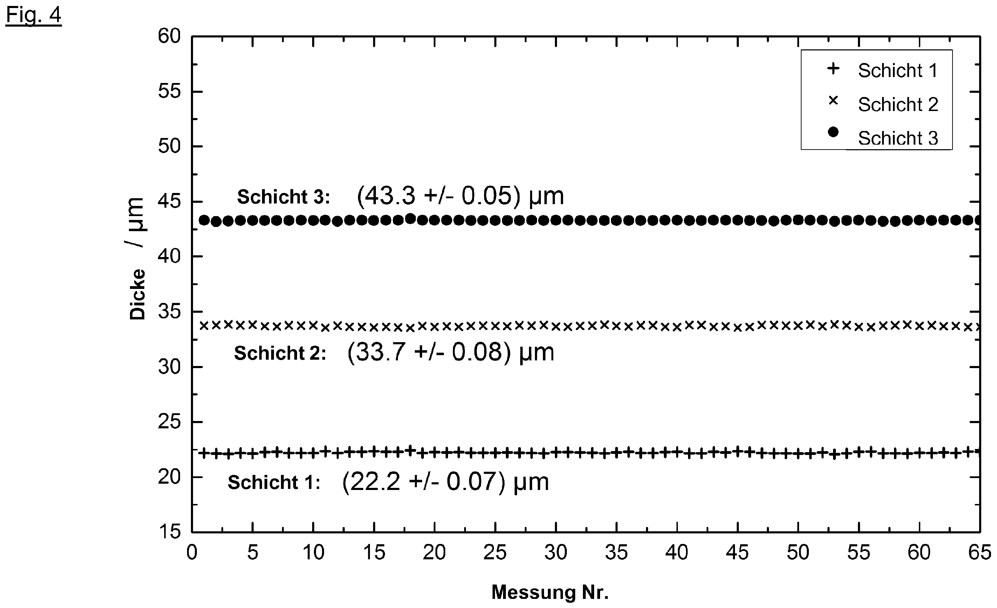

Dem gegenüber zeigt Figur 4 die Messergebnisse der Bestimmung der Schichtdicken der drei Schichten der gleichen Probe 4. Wieder ist das Ergebnis der Schichtdickenmessung für die als Layer 1 bis Layer 3 bezeichneten drei Schichten der Probe 4 gegen die Ordnungsnummer der entsprechenden Messung aufgetragen. Bei diesen Messungen erfolgte die Schichtdickenbestimmung jedoch mit eingeschalteter Korrektur. D.h. die Schichtdicken wurden mit der korrigierten Funktion der Feldstärke von der Zeit bestimmt. Bemerkenswert ist nicht nur, dass die Streuung der einzelnen Messwerte um einen Mittelwert gegenüber den Messungen ohne Korrektur für jede der Schichten erheblich reduziert ist, sondern auch, dass die Absolutwerte der Schichtdicken eine erhebliche Korrektur erfahren haben. Hierin zeigt sich der erhebliche Einfluss einer Verzerrung der Zeitbasis der erfassten Funktion des elektrischen Felds gegenüber der Zeit durch Schwankungen im Abstand der Probe 4 von dem Detektor 3.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarerer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschreiben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Vorrichtung zum zeitaufgelösten Erfassen gepulster elektromagnetischer Hochfrequenzstrahlung
- 2: Generator
- 3: Detektor
- 4: Probe
- 5, 6: Glasfaser
- 7: Anordnung mit Kurzpulslasersystem, Verzögerungsstrecke und Strahlteiler
- 8: von dem Generator 2 generierte Terahertz-Strahlung
- 8': mit der Probe 4 gewechselwirkte Terahertz-Strahlung
- 9: Auswerteeinrichtung
- 10: erfasste elektrische Feldstärke der Terahertz-Strahlung als Funktion der Zeit
- 11: Terahertz-Zeitbereichsspektrometer
- 12: optisches Interferometer
- 13: Abstand als Funktion der Zeit
- 14: korrigierte elektrische Feldstärke der Terahertz-Strahlung als Funktion der Zeit

## Patentansprüche

1. Vorrichtung (1) zum zeitaufgelösten Erfassen gepulster elektromagnetischer Hochfrequenzstrahlung (8) mit
einem Generator (2), wobei der Generator (2) derart eingerichtet ist, dass der Generator (2) in einem Betrieb der Vorrichtung Impulse der elektromagnetischer Hochfrequenzstrahlung (8) erzeugt, und
einem Detektor (3), wobei der Detektor (3) derart eingerichtet und angeordnet ist, dass der Detektor (3) in dem Betrieb der Vorrichtung die Feldstärke der von einer Probe (4) reflektierten Impulse als Funktion (10) der Zeit erfasst,
wobei die Vorrichtung (1) darüber hinaus ein Abstandsmesssystem (12) und eine mit dem Detektor (3) und dem Abstandsmesssystem (12) verbundene Auswerteeinrichtung (9) aufweist,
wobei das Abstandsmesssystem (12) derart eingerichtet und angeordnet ist, dass das Abstandsmesssystem (12) in dem Betrieb der Vorrichtung eine Änderung eines Abstands zwischen dem Generator (2) und der Probe (4) oder zwischen der Probe (4) und dem Detektor (3) als Funktion (13) der Zeit erfasst, und
wobei die Auswerteeinrichtung (9) derart eingerichtet ist, dass die Auswerteeinrichtung (9) aus der erfassten Funktion (10) der Feldstärke von der Zeit und der erfassten Funktion (13) der Änderung des Abstands von der Zeit eine korrigierte Funktion (14) der Feldstärke von der Zeit (10) berechnet, wobei die korrigierte Funktion (14) der Feldstärke berechnet wird, in dem die erfasste Feldstärke eines Impulses zu jedem Zeitpunkt *t* zu einem Zeitpunkt *t'* transferiert wird, welcher demjenigen Zeitpunkt entspricht, zu dem die Feldstärke erfasst worden wäre, wenn sich der Abstand zwischen dem Generator und der Probe (4) oder zwischen der Probe (4) und dem Detektor (3) während der Dauer der Abtastung des Impulses nicht geändert hätte,
und wobei das Erfassen der Änderung des Abstands zwischen dem Generator und der Probe (4) oder zwischen der Probe (4) und dem Detektor (3) als Funktion der Zeit mit einer Messrate von 100 kHz oder mehr, vorzugsweise von 150 kHz oder mehr und besonders bevorzugt von 200 kHz oder mehr erfolgt.

2. Vorrichtung (1) nach Anspruch 1, **dadurch gekennzeichnet, dass** das Abstandsmesssystem (12) ein Interferometer oder ein Radarsystem ist.

3. Vorrichtung (1) nach einem der vorhergehenden Ansprüche, **dadurch gekennzeichnet,**
**dass** die Vorrichtung (1) ein Zeitbereichsspektrometer (11) umfasst mit
einer Kurzpulslaserquelle, die derart eingerichtet ist, dass sie in dem Betrieb der Vorrichtung impulsförmige optische elektromagnetische Strahlung erzeugt,
dem Generator (2) für die Impulse der elektromagnetischen Hochfrequenzstrahlung (8),
dem Detektor (3) für die Impulse der elektromagnetischen Hochfrequenzstrahlung (8),
einer Strahlteilereinrichtung, die derart eingerichtet und angeordnet ist, dass sie in einem Betrieb der Vorrichtung einen ersten Teil der optischen Strahlung auf den Generator (2) und einen zweiten Teil der optischen Strahlung auf den Detektor (3) leitet, und
einer Verzögerungseinrichtung, die derart eingerichtet ist, dass mit der Verzögerungseinrichtung in dem Betrieb der Vorrichtung eine zeitliche Verzögerung zwischen dem Auftreffen der Impulse der elektromagnetischen Hochfrequenzstrahlung (8) und der Impulse der optischen elektromagnetischen Strahlung auf dem Detektor (3) einstellbar veränderbar ist,
wobei die Verzögerungseinrichtung mit der Auswerteeinrichtung (9) verbunden ist und
wobei die Auswerteeinrichtung (9) derart eingerichtet ist, dass sie in dem Betrieb der Vorrichtung die Verzögerungseinrichtung und damit die zeitliche Verzögerung steuert.

4. Verfahren zum zeitaufgelösten Erfassen gepulster elektromagnetischer Hochfrequenzstrahlung (8) mit den Schritten
Erzeugen von Impulsen elektromagnetischer Hochfrequenzstrahlung (8) mit einem Generator (2),
Bestrahlen einer Probe (4) mit den Impulsen der elektromagnetischen Hochfrequenzstrahlung (8) und
Erfassen der Feldstärke der von der Probe (4) reflektierten Impulse als Funktion (10) der Zeit mit einem Detektor (3),
wobei das Verfahren weiterhin die Schritte aufweist Erfassen einer Änderung eines Abstands zwischen dem Generator (2) und der Probe (4) oder zwischen der Probe (4) und dem Detektor (3) als Funktion (13) der Zeit mit einem Abstandsmesssystem (12) und
Berechnen einer korrigierten Funktion (14) der Feldstärke von der Zeit aus der erfassten Funktion (10) der Feldstärke von der Zeit und der Funktion (13) der Änderung des Abstands von der Zeit, wobei die korrigierte Funktion (14) der Feldstärke berechnet wird, in dem die erfasste Feldstärke eines Impulses zu jedem Zeitpunkt *t* zu einem Zeitpunkt *t'* transferiert wird, welcher demjenigen Zeitpunkt entspricht, zu dem die Feldstärke erfasst worden wäre, wenn sich der Abstand zwischen dem Generator und der Probe (4) oder zwischen der Probe (4) und dem Detektor (3) während der Dauer der Abtastung des Impulses nicht geändert hätte,
und wobei das Erfassen der Änderung des Abstands zwischen dem Generator und der Probe (4) oder zwischen der Probe (4) und dem Detektor (3) als Funktion der Zeit mit einer Messrate von 100 kHz oder mehr, vorzugsweise von 150 kHz oder mehr und besonders bevorzugt von 200 kHz oder mehr erfolgt.

5. Verfahren nach Anspruch 4, **dadurch gekennzeichnet, dass** die Probe (4) eine Mehrzahl von N übereinander angeordneten Schichten *Sᵢ* mit jeweils einer Schichtdicke *dᵢ* aufweist, wobei *i = 1, 2, 3, ..., N* und wobei aus der korrigierten Funktion der Feldstärke von der Zeit (10) die Schichtdicken *dᵢ* aller *N* Schichten bestimmt werden.

6. Verfahren nach Anspruch 5, **dadurch gekennzeichnet, dass** Bestimmen der Schichtdicken *dᵢ* die Schritte umfasst
a) Auswählen einer Schichtdicke *dᵢ*, eines Absorptionsindex *kᵢ* und eines Brechungsindex *nᵢ* für jede Schicht *Sᵢ*, mit *i = 1, 2, 3, ..., N,*
b) Berechnen eines zeitabhängigen elektrischen Feldes *E_{M}(t)* für die von der Probe (4) reflektierte elektromagnetische Hochfrequenzstrahlung anhand eines Modells, wobei das Modell entsprechend der Anzahl von N+1 Grenzflächen zwischen einer Messumgebung und der Probe (4) sowie zwischen den einzelnen Schichten jeweils ein zeitabhängiges elektrisches Feld *Eⱼ(t),* mit *j* = *0,1, 2, 3,* ..., *N*, berücksichtigt, wobei die elektrischen Felder *Eⱼ(t)* in Abhängigkeit von den Schichtdicken *dᵢ*, den Absorptionsindizes *kᵢ* und den Brechungsindizes *nᵢ* zu dem zeitabhängigen elektrischen Feld *E_{M}(t)* addiert werden,
c) Vergleichen des berechneten zeitabhängigen elektrischen Feldes *E_{M}(t)* mit der korrigierten Funktion des elektrischen Feldes von der Zeit, wobei
d) dann wenn eine Abweichung Q zwischen dem berechneten elektrischen Feld *E_{M}(t)* und dem erfassten elektrischen Feld *E_{P}(t)* größer ist als eine vorbestimmte Toleranz *T,* die Schichtdicken *dᵢ*, die Brechungsindizes *nᵢ* und die Absorptionsindizes *kᵢ* solange variiert und die Schritte b) bis d) wiederholt werden bis die Abweichung *Q* kleiner als die Toleranz *T* ist, und
e) Bereitstellen der Schichtdicken *dᵢ* als Ergebnis der Schichtdickenbestimmung.

7. Verfahren nach Anspruch 6, **dadurch gekennzeichnet, dass** die elektromagnetische Hochfrequenzstrahlung (8) eine vorgegebene Frequenzbandbreite aufweist und in Schritt b) die Absorptionsindizes *kᵢ* als über die Frequenzbandbreite der verwendeten elektromagnetischen Hochfrequenzstrahlung konstant angenommenen werden und die Brechungsindizes *nᵢ* als über die Frequenzbandbreite der verwendeten elektromagnetischen Hochfrequenzstrahlung konstant angenommenen werden.

8. Verfahren nach Anspruch 6, **dadurch gekennzeichnet, dass** die elektromagnetische Hochfrequenzstrahlung (8) eine vorgegebene Frequenzbandbreite aufweist und in Schritt b) die Absorptionsindizes *kᵢ* als sich über die Frequenzbandbreite der verwendeten elektromagnetischen Hochfrequenzstrahlung ändernd angenommenen werden und die Brechungsindizes *nᵢ* als sich über die Frequenzbandbreite der verwendeten elektromagnetischen Hochfrequenzstrahlung ändernd angenommenen werden, wobei dem Berechnen in Schritt b) eine Funktion der Absorptionsindizes *kᵢ* und der Brechungsindizes *nᵢ* von der Frequenz zu Grunde gelegt wird.

9. Verfahren nach Anspruch 6, **dadurch gekennzeichnet, dass** die elektromagnetische Hochfrequenzstrahlung (8) eine vorgegebene Frequenzbandbreite aufweist und die Frequenzabhängigkeiten der Absorptionsindizes *kᵢ* und der Brechungsindizes *nᵢ* vorab in Kalibrationsmessungen über die Frequenzbandbreite für jede der Schichten vorabbestimmt werden und die vorabbestimmten Frequenzabhängigkeiten dem Berechnen in Schritt b) zu Grunde gelegt werden.

## Claims

1. Apparatus (1) for time-resolved capture of pulsed electromagnetic radio frequency radiation (8) comprising
a generator (2), wherein the generator (2) is so adapted that in operation of the apparatus the generator (2) produces pulses of the electromagnetic radio frequency radiation (8), and
a detector (3), wherein the detector (3) is so adapted and arranged that in operation of the apparatus the detector captures the field strength of the pulses reflected by a sample (4) as a function (10) of time, wherein
the apparatus further has a distance measurement system (12) and an evaluation device (9) connected to the detector (3) and the distance measurement system (12),
wherein the distance measurement system (12) is so adapted and arranged that in operation of the apparatus the distance measurement system (12) captures a change in a distance between the generator (2) and the sample (4) or between the sample (4) and the detector (3) as a function (13) of time, and
wherein the evaluation device (9) is so adapted that the evaluation device (9) calculates a corrected function (14) of the field strength over time (10) from the captured function (10) of the field strength over time and the detected function (13) of the change in distance over time, wherein the corrected function (14) of the field strength is calculated by the captured field strength of a pulse being transferred at each time t to a time t' which corresponds to that time at which the field strength would have been captured if the distance between the generator and the sample (4) or between the sample (4) and the detector (3) would not have changed during the duration of the pulse,
and wherein capture of the change in the distance between the generator and the sample (4) or between the sample (4) and the detector (3) as a function of time is effected with a measurement rate of 100 kHz or more, preferably 150 kHz or more and particularly preferably 200 kHz or more.

2. Apparatus (1) according to claim 1 **characterised in that** the distance measurement system (12) is an interferometer or a radar system.

3. Apparatus (1) according to one of the preceding claims **characterised in that** the apparatus (1) includes a time domain spectrometer (11) with
a short pulse laser source which is so adapted that in operation of the apparatus it produces optical electromagnetic radiation in pulse form,
the generator (2) for the pulses of the electromagnetic radio frequency radiation (8),
the detector (3) for the pulses of the electromagnetic radio frequency radiation (8),
a beam splitting device which is so adapted and arranged that in operation of the apparatus it passes a first part of the optical radiation on to the generator (2) and a second part of the optical radiation on to the detector (3), and
a delay device which is so adapted that in operation of the apparatus a time delay between impingement of the pulses of the electromagnetic radio frequency radiation (8) and the pulses of the optical electromagnetic radiation on the detector (3) is adjustably variable with the delay device,
wherein the delay device is connected to the evaluation device (9), and wherein the evaluation device (9) is so adapted that in operation of the apparatus it controls the delay device and the time delay.

4. A method for time-resolved capture of pulsed electromagnetic radio frequency radiation (8) comprising the steps:
producing pulses of electromagnetic radio frequency radiation (8) with a generator (2),
irradiating a sample (4) with the pulses of the electromagnetic radio frequency radiation (8), and
capturing the field strength of the pulses reflected by the sample (4) as a function (10) of time with a detector (3),
wherein the method further comprises the steps:
capturing a change in a distance between the generator (2) and the sample (4) or between the sample (4) and the detector (3) as a function (13) of time with a distance measurement system (12), and
calculating a corrected function (14) of the field strength over time from the captured function (10) of the field strength over time and the function (13) of the change in distance over time, wherein the corrected function (14) of the field strength is calculated by the captured field strength of a pulse being transferred at each time t to a time t' which corresponds to that time at which the field strength would have been captured if the distance between the generator and the sample (4) or between the sample (4) and the detector (3) would not have changed during the duration of the pulse,
and wherein capture of the change in the distance between the generator and the sample (4) or between the sample (4) and the detector (3) as a function of time is effected with a measurement rate of 100 kHz or more, preferably 150 kHz or more and particularly preferably 200 kHz or more.

5. A method according to claim 4 **characterised in that** the sample (4) has a plurality of N mutually superposed layers *Sᵢ* each of a layer thickness *dᵢ*, wherein i = 1,2,3,..., N and wherein the layer thicknesses *dᵢ* of all N layers are determined from the corrected function of the field strength over time (10).

6. A method according to claim 5 **characterised in that** the operation of determining the layer thicknesses dᵢ includes the steps:
a) selecting a layer thickness dᵢ, an absorption index kᵢ and a refractive index nᵢ for each layer Sᵢ, with i = 1, 2, 3, ..., N,
b) calculating a time-dependent electrical field E_{M}(t) for the electromagnetic radio frequency radiation reflected by the sample (4) by means of a model, wherein the model respectively takes account of a time-dependent electrical field Eⱼ(t) with j = 0,1,2,3,..., N according to the number of N+1 interfaces between a measurement environment and the sample (4) and between the individual layers, wherein the electrical fields Eⱼ(t) are added in dependence on the layer thicknesses dᵢ, the absorption indices kᵢ and the refractive indices nᵢ to the time-dependent electrical field E_{M}(t),
c) comparing the calculated time-dependent electrical field E_{M}(t) to the corrected function of the electrical field over time, wherein
d) when a deviation Q between the calculated electrical field E_{M}(t) and the captured electrical field E_{P}(t) is greater than a predetermined tolerance T the layer thicknesses dᵢ, the refractive indices nᵢ and the absorption indices kᵢ are varied for so long and steps b) to d) are repeated until the deviation Q is smaller than the tolerance T, and
e) providing the layer thicknesses dᵢ as the result of the layer thickness determining operation.

7. A method according to claim 6 **characterised in that** the electromagnetic radio frequency radiation (8) has a predetermined frequency bandwidth and in step b) the absorption indices kᵢ is assumed to be constant over the frequency bandwidth of the electromagnetic radio frequency radiation used and the refractive indices nᵢ is assumed to be constant over the frequency bandwidth of the electromagnetic radio frequency radiation used.

8. A method according to claim 6 **characterised in that** the electromagnetic radio frequency radiation (8) has a predetermined frequency bandwidth and in step b) the absorption indices kᵢ are assumed to be changing over the frequency bandwidth of the electromagnetic radio frequency radiation used and the refractive indices nᵢ are assumed to be changing over the frequency bandwidth of the electromagnetic radio frequency radiation used, wherein the calculation in step b) is based on a function of the absorption indices kᵢ and the refractive indices nᵢ on the frequency.

9. A method according to claim 6 **characterised in that** the electromagnetic radio frequency radiation (8) has a predetermined frequency bandwidth and the frequency dependencies of the absorption indices kᵢ and the refractive indices nᵢ are predetermined in advance in calibration measurements over the frequency bandwidth for each of the layers and the predetermined frequency dependencies form the basis for the calculation in step b).

## Revendications

1. Dispositif (1) pour la détection à résolution temporelle d'un rayonnement haute fréquence électromagnétique (8) pulsé avec
un générateur (2), le générateur (2) étant configuré de telle sorte que le générateur (2), lors d'un fonctionnement du dispositif, génère des impulsions du rayonnement haute fréquence électromagnétique (8), et
un détecteur (3), le détecteur (3) étant configuré et disposé de telle sorte que, lors du fonctionnement du dispositif, le détecteur (3) saisisse l'intensité de champ des impulsions réfléchies par un échantillon (4) en tant que fonction du temps (10),
le dispositif (1) comprenant en outre un système de mesure de distance (12) et un dispositif d'évaluation (9) relié au détecteur (3) et au système de mesure de distance (12),
le système de mesure de distance (12) étant configuré et disposé de telle sorte que le système de mesure de distance (12), lors du fonctionnement du dispositif, saisisse un changement d'une distance entre le générateur (2) et l'échantillon (4) ou entre l'échantillon (4) et le détecteur (3) en tant que fonction du temps (13), et
le dispositif d'évaluation (9) étant configuré de telle sorte que le dispositif d'évaluation (9) calcule, sur la base de l'intensité de champ saisie en tant que fonction du temps (10) et du changement de distance saisi en tant que fonction du temps (13), une fonction (14) corrigée de l'intensité de champ en tant que fonction du temps, la fonction (14) corrigée de l'intensité du champ étant calculée en transférant l'intensité de champ d'une impulsion saisie à chaque instant *t* à un instant *t'* qui correspond à l'instant auquel l'intensité de champ aurait été saisie si la distance entre le générateur et l'échantillon (4) ou entre l'échantillon (4) et le détecteur (3) n'avait pas changé pendant la durée de l'échantillonnage de l'impulsion,
et la saisie du changement de la distance entre le générateur et l'échantillon (4) ou entre l'échantillon (4) et le détecteur (3) en tant que fonction du temps étant effectuée avec une fréquence de mesure de 100 kHz ou plus, de préférence de 150 kHz ou plus et, de manière particulièrement préférée, de 200 kHz ou plus.

2. Dispositif (1) selon la revendication 1, **caractérisé en ce que** le système de mesure de distance (12) est un interféromètre ou un système radar.

3. Dispositif (1) selon l'une des revendications précédentes, **caractérisé en ce que** le dispositif (1) comprend un spectromètre temporel (11) avec
une source laser à impulsions courtes configurée de telle sorte que, lors du fonctionnement du dispositif, elle génère un rayonnement électromagnétique optique pulsé,
le générateur (2) pour les impulsions du rayonnement haute fréquence électromagnétique (8),
le détecteur (3) pour les impulsions du rayonnement haute fréquence électromagnétique (8),
un dispositif diviseur de faisceau qui est configuré et disposé de telle sorte que, lors du fonctionnement du dispositif, il oriente une première partie du rayonnement optique vers le générateur (2) et une deuxième partie du rayonnement optique vers le détecteur (3), et
un dispositif de retardement qui est configuré de telle sorte que, avec le dispositif de retardement, lors du fonctionnement du dispositif, un retardement temporel entre l'impact des impulsions du rayonnement haute fréquence électromagnétique (8) et des impulsions du rayonnement électromagnétique optique sur le détecteur (3) puisse être changé de façon réglable,
le dispositif de retardement étant connecté au dispositif d'évaluation (9) et
le dispositif d'évaluation (9) étant configuré de telle sorte que, lors du fonctionnement du dispositif, il commande le dispositif de retardement et ainsi le retardement temporel.

4. Procédé pour la détection à résolution temporelle d'un rayonnement haute fréquence électromagnétique pulsé avec les étapes de
générer des impulsions de rayonnement haute fréquence électromagnétiques (8) avec un générateur (2),
irradier un échantillon (4) avec les impulsions du rayonnement haute fréquence électromagnétique (8) et
capter, avec un détecteur (3), la force de champ des impulsions réfléchies par l'échantillon (4) en tant que fonction du temps (10),
le procédé comprenant en outre les étapes de
détecter, avec un système de mesure de distance, un changement de distance entre le générateur (2) et l'échantillon (4) ou entre l'échantillon (4) et le détecteur (3) en fonction (13) du temps et
calculer une fonction corrigée (14) de la force de champ en tant que fonction du temps à partir de la fonction détectée (10) de la force de champ en tant que fonction du temps et de la fonction (13) du changement de la distance en tant que fonction du temps, la fonction corrigée (14) de la force de champ étant calculée en transférant l'intensité de champ d'une impulsion saisie à chaque instant *t* à un instant *t'* qui correspond à l'instant auquel l'intensité de champ aurait été saisie si la distance entre le générateur et l'échantillon (4) ou entre l'échantillon (4) et le détecteur (3) n'avait pas changé pendant la durée de l'échantillonnage de l'impulsion,
et la saisie du changement de la distance entre le générateur et l'échantillon (4) ou entre l'échantillon (4) et le détecteur (3) en tant que fonction du temps étant effectuée avec une fréquence de mesure de 100 kHz ou plus, de préférence de 150 kHz ou plus et, de manière particulièrement préférée, de 200 kHz ou plus.

5. Procédé selon la revendication 4, **caractérisé en ce que** l'échantillon (4) comprend une pluralité de *N* couches Sᵢ disposées les unes au-dessus des autres avec une épaisseur de couche *dᵢ* respective avec *i = 1, 2,* 3, ..., *N* et les épaisseurs *dᵢ* de toutes les N couches étant déterminées à partir de la force de champ en tant que fonction du temps corrigée (10).

6. Procédé selon la revendication 5, **caractérisé en ce que** déterminer les épaisseurs *dᵢ* des couches comprend les étapes
a) sélectionner une épaisseur de couche *dᵢ*, un indice d'absorption *kᵢ* et un indice de réfraction *nᵢ* pour chaque couche *Sᵢ* avec *i = 1, 2, 3, ..., N,*
b) calculer, sur la base d'un modèle, un champ électrique *E_{M}(t)* fonction du temps pour le rayonnement haute fréquence électromagnétique réfléchi par l'échantillon (4), le modèle prenant en compte, selon le nombre *N+1* d'interfaces entre un environnement de mesure et l'échantillon (4) ainsi qu'entre les différentes couches, un champ électrique *Eⱼ(t)* respectif et fonction du temps avec *j* = *0, 1, 2, 3, ..., N,* les champs électriques *Eⱼ(t)* étant ajoutés au champ électrique *E_{M}(t)* fonction du temps selon les épaisseurs de couche *dᵢ*, des indices d'absorption *kᵢ* et des indices de réfraction *nᵢ*,
c) comparer le champ électrique *E_{M}(t)* calculé et fonction du temps avec le champ électrique corrigé et fonction du temps,
d) et lorsqu'un écart *Q* entre le champ électrique *E_{M}(t)* calculé et le champ électrique *E_{P}(t)* saisi est supérieur à une tolérance *T* prédéterminée, les épaisseurs de couche *dᵢ*, les indices d'absorption *kᵢ* et les indices de réfraction *nᵢ* sont variés et les étapes b) à d) sont répétées jusqu'à ce que l'écart *Q* est inférieur à la tolérance *T,* et
e) fournir les épaisseurs des couches *dᵢ* en tant que résultat de la détermination de l'épaisseur de la couche.

7. Procédé selon la revendication 6, **caractérisé en ce que** le rayonnement haute fréquence électromagnétique (8) comprend une largeur de bande de fréquence prédéfinie et que, à l'étape b), les indices d'absorption *kᵢ* sont considérés comme constants sur la bande passante de fréquence du rayonnement haute fréquence électromagnétique utilisé et que les indices de réfraction *nᵢ* sont considérés comme constants sur toute la bande passante de fréquence du rayonnement haute fréquence électromagnétique utilisé.

8. Procédé selon la revendication 6, **caractérisé en ce que** le rayonnement haute fréquence électromagnétique (8) a une largeur de bande de fréquence prédéfinie et que, à l'étape b), les indices d'absorption *kᵢ* sont considérés comme variants sur la bande passante de fréquence du rayonnement haute fréquence électromagnétique utilisé et que les indices de réfraction *nᵢ* sont considérés comme changeants sur la largeur de bande de fréquences du rayonnement haute fréquence électromagnétique utilisé, à l'étape b), une dépendance des indices d'absorption *kᵢ* et des indices de réfraction *nᵢ* de la fréquence étant prise comme base pour le calcul.

9. Procédé selon la revendication 6, **caractérisé en ce que** le rayonnement haute fréquence électromagnétique (8) a une bande passante de fréquence prédéterminée et que les dépendances de fréquence des indices d'absorption *kᵢ* et les indices de réfraction *nᵢ* sont préalablement prédéterminés par des mesures d'étalonnage préliminaires sur la largeur de bande passante de fréquence pour chacune des couches et que les dépendances de fréquence prédéterminées sont mises à la base des calculs à l'étape b).
